# EUROPEAN PATENT SPECIFICATION

(11) **EP 4 015 243 B1**
(45) Date of publication and mention of the grant of the patent: **01.05.2024**
(21) Application number: 21212275.8
(22) Date of filing: 03.12.2021
(51) Int. Cl.: B60C 9/22

(54) **TIRE WITH PROTECTIVE BELT STRUCTURE**
REIFEN MIT SCHUTZGÜRTELSTRUKTUR
PNEU DOTÉ D'UNE STRUCTURE DE BANDE DE PROTECTION

(30) Priority: 16.12.2020 US 202063126049 P; 26.10.2021 US 202117452269
(43) Date of publication of application: 22.06.2022
(73) Proprietor: The Goodyear Tire & Rubber Company, Akron, OH 44316 (US)
(72) Inventor: KMIECIK, Frank Anthony, Akron 44313 (US); REITER, Leonard James, Norton 44203 (US); VAN RIPER, Philip Carl, Cuyahoga Falls 44223 (US); MORALES, Pablo Rafael, Brimfield 44240 (US)
(74) Representative: Kutsch, Bernd

(56) References cited:
- EP-A1- 1 800 902
- EP-A1- 3 825 149
- EP-A1- 3 895 910

## Description

### Field of the Invention

The invention relates generally to tires and more particularly to heavy duty tires, such as truck, bus or aircraft tires.

### Background of the Invention

Aircraft, truck or bus tires are typically retreaded in order to reuse the large and complex tire carcass multiple times. However, the treads of truck, bus or aircraft tires may be subject to frequent punctures from stones or other sharp objects in the road or runway surface. The frequency and severity of punctures may cause the tire carcass to be scrapped. Cut protector belts are typically used to try and prevent the carcass from being damaged. However, cut protector belts are often not stiff enough to prevent the damage to the carcass. The sharp object tends to move the belt out of the way in order to pierce the carcass.

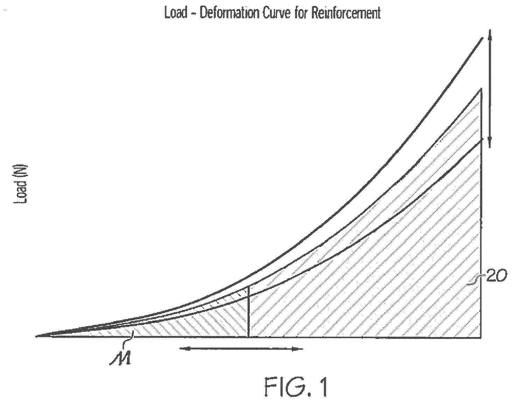

FIG. 1 illustrates a load vs. deformation curve representative for a cut protector belt with reinforcements. Area 11 represents the reinforcement cord preload due to the tire pressure when inflated, and the design goal is to minimize this area 10. Area 20 represents the cut energy absorption capacity, with the design goal to increase the area 20. While controlling the modulus of the primary belt material, using a higher modulus reinforcement for the cut protector layer increases the total area (Sum of 10 and 20) while increasing the ratio of 10/20. Using a lower modulus reinforcement decreases the total area, while also decreasing the ratio of 10/20. Thus, the goal of increasing area 20 while decreasing area 10 are in opposition.

Thus, a protector belt that has improved cut resistance to foreign object damage, is desired. The improved protector belt can be used on new or retreaded tires to improve the service life of the tire carcass.

EP 1 800 902 A1 describes a tire in accordance with the preamble of claim 1.

### Summary of the Invention

The invention relates to a tire in accordance with claim 1.

Dependent claims refer to preferred embodiments of the invention.

The invention provides a tire having a jointless protector belt that is continuously wound using a strip of one or more reinforcement cords, wherein the one or more reinforcement cords are formed of nylon or of a blend of aramid and nylon.

In one aspect of the invention, the protector belt 100 is a single belt layer. Alternatively, the protector belt 100 may comprises multiple belt layers.

In a preferred aspect of the invention, the tire has a carcass having at least two carcass plies such as four, five of six carcass plies.

Preferably, at least two carcass plies such as four carcass pies are wound around the bead core of the tire from inside of the tire toward outside thereof to form turnup portions. Preferably, at least one further carcass ply such as two further carcass plies are extended downward to the bead core along the outside of the turnup portion of the at least two inner carcass plies.

In a preferred aspect of the invention, the tire further has a belt package arranged between the tire carcass and the tire tread portion and radially inward of the jointless protector belt.

Preferably, the belt package comprises one, two, three or more belt plies that are relatively low angle belt plies, with a belt angle of 10 degrees or less, more preferably with a belt angle of 5 degrees or less with respect to the circumferential direction of the tire.

Preferably, the belt package comprises several belt plies that increase in width from the radially innermost belt ply to the radially outermost belt ply.

Preferably, the belt package includes one, two, three or more zigzag belt structures and one, two, three or more relatively low angle belts. The one or more zigzag belt structures are preferably located radially outward of the one or more relatively low angle belt plies.

### Definitions

"Aspect ratio" of the cord means the ratio of its height (H) to its width (W) multiplied by 100 percent for expression as a percentage.

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Lateral" means an axial direction.

"Lateral edges" means a line tangent to the axially outermost tread contact patch or footprint as measured under normal load and tire inflation, the lines being parallel to the equatorial center plane.

"Radial" and "radially" means directions radially toward or away from the axis of rotation of the tire.

"Zigzag belt reinforcing structure" means a belt structure formed of at least two layers of cords interwoven together wherein a ribbon of parallel cords having 1 to 20 cords in each ribbon are laid up in an alternating pattern extending at an angle typically between 5° and 45° between lateral edges of the belt, and more preferably between 3 and 11 degrees, and most preferably between 5 and 11 degrees.

### Brief Description of the Drawings

The invention will be described by way of example and with reference to the accompanying drawings in which:
FIG. 1 illustrates a load vs. deformation curve for a cut protector reinforcement to break, wherein the portion 10 represents cord preload due to inflation, and area 20 represents cut energy absorption capacity;
FIG. 2 illustrates a cross-sectional view of one half of a tire of the present invention;
FIG. 3 is a close-up perspective view of the upper portion of FIG. 2 showing the protector belt and belt package of the present invention;
FIG. 4 illustrates the protector belt, as if laid out into a flat position, from zero to 360 degrees;
FIG. 5 illustrates a front view of a tire carcass with the application of a continuously wound ribbon of cords forming a jointless protector belt having a wavy pattern;
FIG. 6 is a three-dimensional scatter plot of turn radius, sin per revolution, and % extra cord;
FIG. 7 is a three-dimensional scatter plot of turn radius, amplitude and % extra cord;
FIG. 8 illustrates the strip of cord being applied by an applier to the carcass; and
FIG. 9 illustrates the turn radius.

### Detailed Description of Preferred Embodiment of the Present Invention

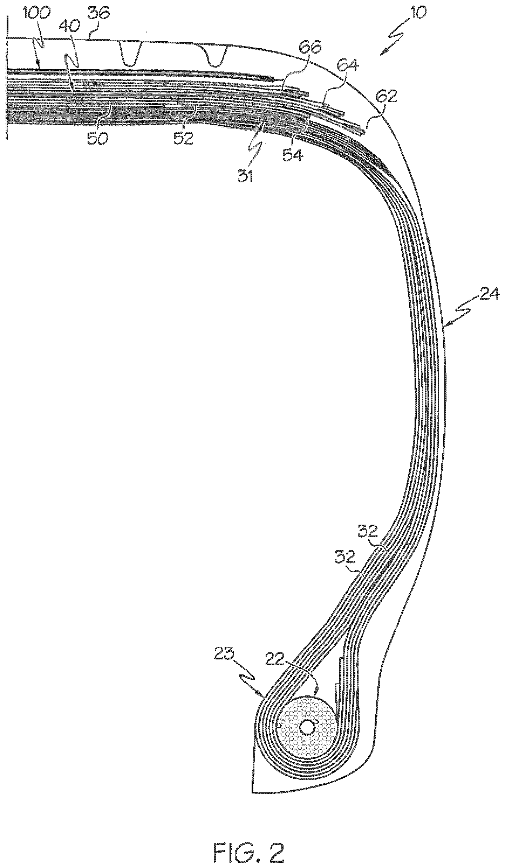

FIGS. 2-3 illustrates a cross-sectional view of a first embodiment of a tire 10 of the present invention. The radial tire in this example is an aircraft tire, which includes a pair of bead portions 23 each containing a bead core 22 embedded therein, a sidewall portion 24 extending substantially outward from each of the bead portions 23 in the radial direction of the tire, and a tread portion 36 of substantially cylindrical shape extending between radially outer ends of these sidewall portions 24. Furthermore, the tire 10 is reinforced with a carcass 31 toroidally extending from one of the bead portions 23 to the other bead portion 23. The carcass 31 is comprised of at least two carcass plies 32, e.g., six carcass plies 32 in the illustrated embodiment. Among these carcass plies 32, four inner plies are wound around the bead core 22 from inside of the tire toward outside thereof to form turnup portions, while two outer plies are extended downward to the bead core 22 along the outside of the turnup portion of the inner carcass ply 32. Each of these carcass plies 32 contains many nylon cords such as nylon-6,6 cords extending substantially perpendicular to an equatorial plane E of the tire (i.e., extending in the radial direction of the tire).

A belt package 40 is arranged between the carcass 31 and the tread rubber 36 and is comprised of one or more belt plies 50, 52, 54 preferably the radially innermost belts which are located near the carcass 31. Preferably, the one or more belt plies 50, 52, 54 are low angle belts, with a belt angle of 10 degrees or less, more preferably with a belt angle of 5 degrees or less. Preferably, the one or more low angle belts 50, 52, 54 increase in width from the radially innermost belt 50 to the radially outermost belt 54.

The belt package preferably includes one or more zigzag belt structures 62, 64, 66 located radially outward of the low angle belts 50, 52, 54. Each of the radially outer zigzag belt structures is formed by winding a rubberized strip of one or more parallel reinforcement cords generally in the circumferential direction while being inclined to extend between side ends or lateral edges of the layer forming a zigzag path and conducting such a winding many times while the strip is shifted at approximately a width of the strip in the circumferential direction so as not to form a gap between the adjoining strips. The strip of reinforcement cords preferably has a width W, W being in the range of from 5 mm to 38 mm (0.2 to 1.5 inches). It is preferable that the strip width W should be 25.4 mm (1.0 inch) or less to facilitate bending to form the zigzag paths.

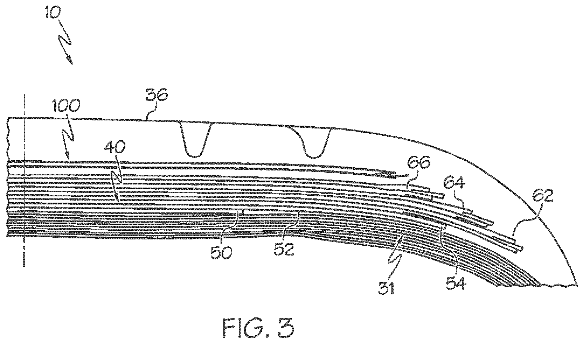

The belt package may further include a top belt or protector belt 100 that is the radially outermost belt. The protector belt 100 is shown in FIGS. 3-5 and is formed of a continuously wound strip of reinforcement cords to form a jointless belt. The protector belt 100 may be a single belt layer or multiple belt layers. The continuously wound strip is formed in a wave configuration. The wave configuration is preferably a sine wave and extends primarily in the circumferential direction. The jointless protector belt is formed by continuously winding strip. The strip is formed of one or more parallel reinforcements encased in rubber.

The reinforcement cords of the strip may comprise one or more parallel reinforcement cords made of nylon or nylon 6,6. Preferably, the reinforcement cords of the strip are high modulus cord reinforcements, such as hybrid or merged cords of nylon and aramid. More preferably, the cord construction is 3000 dtex/2 aramid and 1680 dtext/1 nylon. Preferably, the strip of reinforcement cords used to form the protector belt ranges in width from 6.35 mm to 12.7 mm (0.25 to 0.5 inches) and has 4-10 number of reinforcement cords.

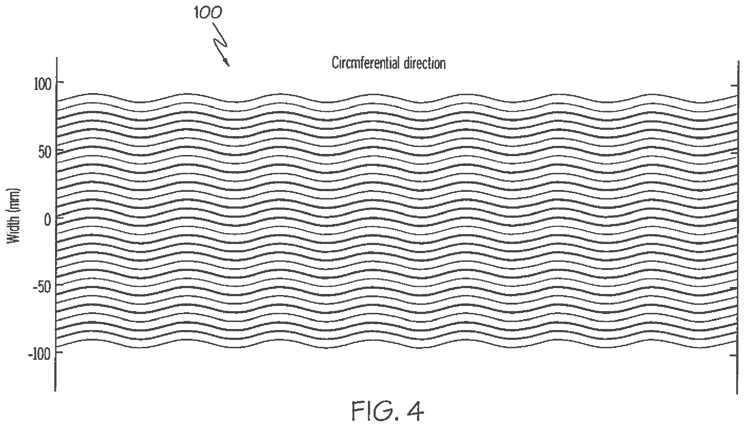

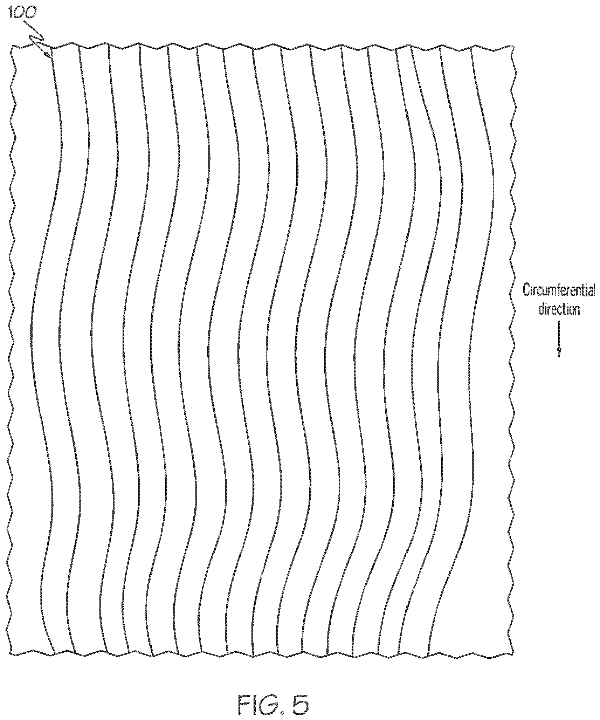

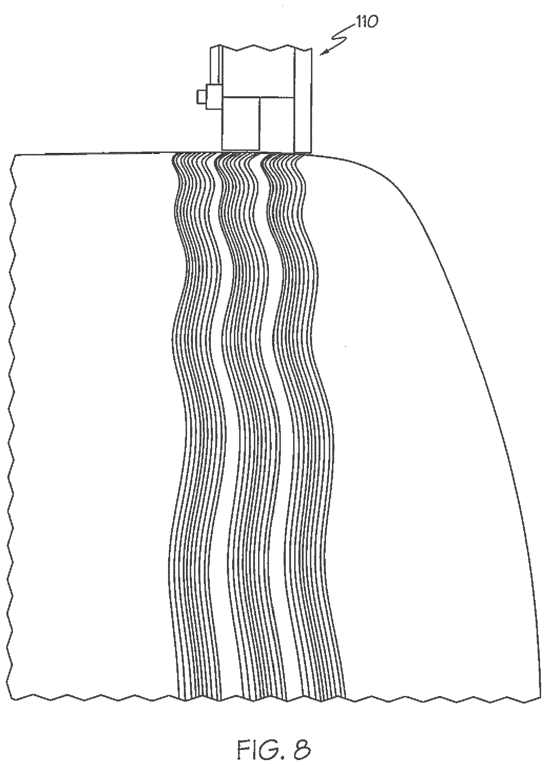

The protector belt 100 preferably has a width which extends from a first shoulder to a second shoulder, i.e., full belt width. Preferably, the protector belt width is 38.1 mm to 50.8 mm (1.5 to 2 inches) inboard from the widest belt width to minimize durability risk. FIG. 4 illustrates the protector belt 100 from 0 to 360 degrees. As shown in FIG. 8, the protector belt 100 is formed by an applier head 110 that lays the continuous strip of reinforcement cords directly onto the carcass (of either a new tire or a retread) using a sine wave curve. FIG. 5 illustrates the formed protector belt 100 onto the tire carcass, with no gaps in between the belt windings. Advantageously, the jointless protector belt eliminates cut belt ends of conventional wavy belt layers. Prior art wavy belt layers are typically formed in a calendered sheet, which is then applied to the carcass by splicing the outer lateral ends of the sheet together. The disadvantage to the splice is that it is a huge nonuniformity that can contribute to tread loss, as well as requiring additional manufacturing complexity.

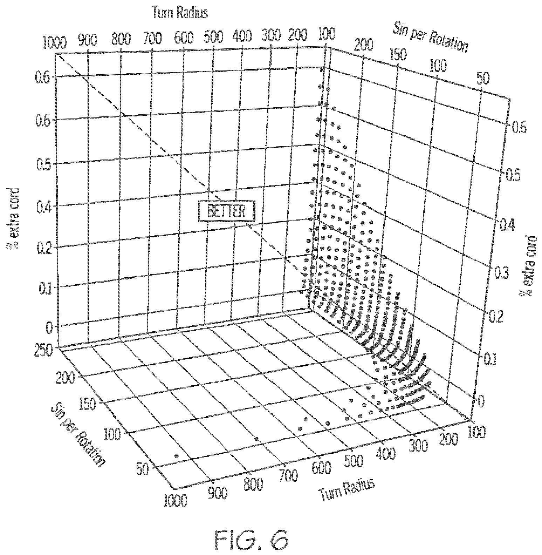

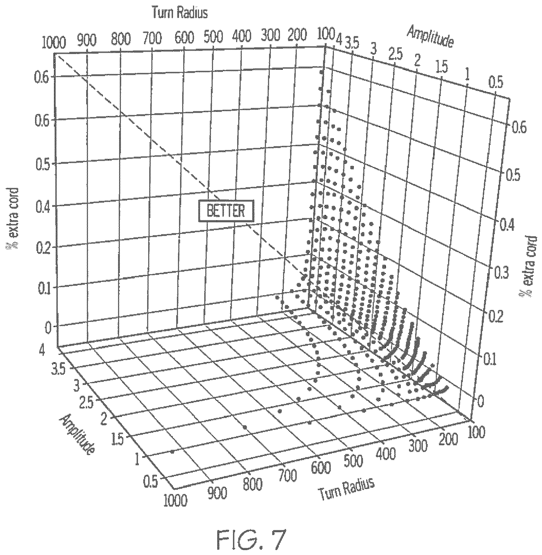

The period ranges from 50 mm to 100 mm and more preferably from 75 mm to 100 mm. While it is desired to minimize the period, it is constrained due to the application method. The % extra cord ratio referred to herein, and shown in FIGS. 6-7, means the actual length of the cord used to form the sine wave in one revolution divided by the circumferential length of the application surface. The % extra cord ratio ranges from 101% to 115% and more preferably from 101% to 105%. The higher the ratio, the more the cord is unloaded or "loose." Looser or unloaded cords maximize the cut resistance for a given material modulus.

The amplitude of the sine wave affects the extra cord %. As the amplitude increases, so does the extra cord %. Preferably, the sine wave amplitude ranges from 1 to 5 mm, and more preferably, from 2 mm to 3.5 mm, and more preferably from 2.5 mm to 3 mm. Amplitudes exceeding 5 mm can lead to unfavorable tire appearance.

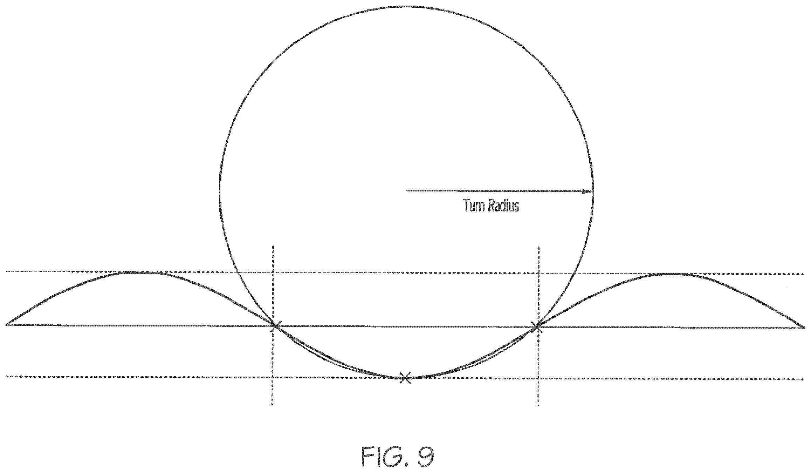

The turn radius is minimized up to the limit of strip buckling. The turn radius is defined as the radius of the circle traversing between three points on the sine wave as shown in FIG 9. Preferably, the two outer points are where the sine wave intersects the neutral axis of the wave, and the third point is at the peak amplitude located between the two outer points. As the turn radius decreases, the % extra cord increases, resulting in more loose cord per area, which is desired for FOD protection. The turn radius is preferably minimized, more preferably in the range of from 50 mm to 100 mm. Using the 0.5" strip a turn radius of 75 mm is preferred as it can be consistently maintained from a quality perspective.

## Claims

1. A tire having a jointless protector belt (100), wherein the jointless protector belt (100) is a continuously wound strip of one or more reinforcement cords, wherein the strip of one or more reinforcement cords is wound in a sine wave pattern or in a wavy pattern, **characterized in that** the one or more reinforcement cords are formed of nylon or a blend of nylon and aramid.

2. The tire of claim 1 wherein the sine wave pattern or the wavy pattern extends in the circumferential direction of the tire (10).

3. The tire of claim 1 or 2 wherein a period of the sine wave pattern or of the wavy pattern is in the range of from 75mm to 100 mm.

4. The tire of at least one of the previous claims wherein the amplitude of the sine wave pattern or of the wavy pattern is in the range of from 1 to 5 mm, preferably from 2 mm to 3.5 mm or from 2.5 mm to 3 mm.

5. The tire of at least one of the previous claims wherein a turn radius of the sine wave pattern or of the wavy pattern is less than 100 mm, wherein the turn radius is defined as the radius of the circle traversing between three points on the sine wave.

6. The tire of at least one of the previous claims wherein the strip of reinforcement cord has a width in the range of from 5 mm 51 mm, preferably in the range of from 6.35 mm to 12.7 mm.

7. The tire of at least one of the previous claims wherein the one or more reinforcement cords is made of nylon 6/6.

8. The tire of at least one of the previous claims wherein the one or more reinforcement cords are 3000/1/3 dtex cords, preferably with 6 twists per 2.54 cm.

9. The tire of at least one of the previous claims wherein the one or more reinforcement cords of the strip is formed of a first reinforcement cable and a second reinforcement cable twisted together to form a merged cord, wherein the first reinforcement cord and the second reinforcement cord are formed of different materials.

10. The tire of at least one of the previous claims wherein the one or more reinforcement cords of the strip is formed of a nylon reinforcement cable and an aramid reinforcement cable twisted together to form a merged cord.

11. The tire of at least one of the previous claims wherein the one or more reinforcement cord is formed of a blend of nylon and aramid.

12. The tire of at least one of the previous claims wherein the tire (10) further has a belt package (40) arranged between a tire carcass (31) and a tire tread portion (36) and radially inward of the jointless protector belt (100).

13. The tire of claim 12 wherein the belt package (40) includes one or more zigzag belt structures (62, 64, 66) and one or more relatively low angle belts (50, 52, 54).

14. The tire of at least one of the previous claims wherein the protector belt (100) extends from a first tire shoulder to a second tire shoulder and/or ends on either side of the protector belt (100) in a range of from 38.1 mm to 50.8 mm inboard from the width of the widest belt of the tire (10).

## Patentansprüche

1. Reifen, der einen nahtlosen Protektorgürtel (100) aufweist, wobei der nahtlose Protektorgürtel (100) ein kontinuierlich gewickelter Streifen aus einem oder mehreren Verstärkungskorden ist, wobei der Streifen aus einem oder mehreren Verstärkungskorden in einem Sinuswellenmuster oder in einem Wellenmuster gewickelt ist, **dadurch gekennzeichnet, dass** der eine oder die mehreren Verstärkungskorde aus Nylon oder einer Mischung aus Nylon und Aramid gebildet sind.

2. Reifen nach Anspruch 1, wobei das Sinuswellenmuster oder das Wellenmuster sich in der Umfangsrichtung des Reifens (10) erstreckt.

3. Reifen nach Anspruch 1 oder 2, wobei die Periode des Sinuswellenmusters oder des Wellenmusters in dem Bereich von 75 mm bis 100 mm liegt.

4. Reifen nach mindestens einem der vorhergehenden Ansprüche, wobei die Amplitude des Sinuswellenmusters oder des Wellenmusters in dem Bereich von 1 bis 5 mm, vorzugsweise von 2 mm bis 3,5 mm oder von 2,5 mm bis 3 mm liegt.

5. Reifen nach mindestens einem der vorhergehenden Ansprüche, wobei der Kurvenradius des Sinuswellenmusters oder des Wellenmusters weniger als 100 mm beträgt, wobei der Kurvenradius als der Radius des Kreises definiert ist, der zwischen drei Punkten auf der Sinuswelle verläuft.

6. Reifen nach mindestens einem der vorhergehenden Ansprüche, wobei der Streifen aus Verstärkungskord eine Breite in dem Bereich von 5 mm bis 51 mm, vorzugsweise in dem Bereich von 6,35 mm bis 12,7 mm, aufweist.

7. Reifen nach mindestens einem der vorhergehenden Ansprüche, wobei der eine oder die mehreren Verstärkungskordeln aus Nylon 6/6 hergestellt sind.

8. Reifen nach mindestens einem der vorhergehenden Ansprüche, wobei der eine oder die mehreren Verstärkungskorde 3000/1/3 dtex-Korde sind, vorzugsweise mit 6 Zwirnen pro 2,54 cm.

9. Reifen nach mindestens einem der vorhergehenden Ansprüche, wobei der eine oder die mehreren Verstärkungskorde des Streifens aus einem ersten Verstärkungskabel und einem zweiten Verstärkungskabel gebildet sind, die miteinander verdrillt sind, um einen verschmolzenen Kord zu bilden, wobei der erste Verstärkungskord und der zweite Verstärkungskord aus unterschiedlichen Materialien gebildet sind.

10. Reifen nach mindestens einem der vorhergehenden Ansprüche, wobei der eine oder die mehreren Verstärkungskord(e) des Streifens aus einem Nylon-Verstärkungskabel und einem Aramid-Verstärkungskabel gebildet ist/sind, die miteinander verdrillt sind, um einen verschmolzenen Kord zu bilden.

11. Reifen nach mindestens einem der vorhergehenden Ansprüche, wobei der eine oder die mehreren Verstärkungskorde aus einer Mischung aus Nylon und Aramid gebildet ist.

12. Reifen nach mindestens einem der vorhergehenden Ansprüche, wobei der Reifen (10) weiterhin ein Gürtelpaket (40) aufweist, das zwischen einer Reifenkarkasse (31) und einem Reifenlaufflächenabschnitt (36) und radial innerhalb des nahtlosen Protektorgürtels (100) angeordnet ist.

13. Reifen nach Anspruch 12, wobei das Gürtelpaket (40) eine oder mehrere Zickzack-Gürtelstrukturen (62, 64, 66) und einen oder mehrere Gürtel mit relativ niedrigem Winkel (50, 52, 54) umfasst.

14. Reifen nach mindestens einem der vorhergehenden Ansprüche, wobei sich der Protektorgürtel (100) von einer ersten Reifenschulter zu einer zweiten Reifenschulter erstreckt und/oder auf beiden Seiten des Protektorgürtels (100) in einem Bereich von 38,1 mm bis 50,8 mm innerhalb der Breite des breitesten Gürtels des Reifens (10) endet.

## Revendications

1. Bandage pneumatique possédant une ceinture de protection sans soudure (100), dans lequel la ceinture de protection sans soudure (100) est une bande enroulée en continu, constituée par un ou plusieurs câblés de renforcement, dans lequel la bande constituée par un ou plusieurs câblés de renforcement est enroulée sur la base d'un motif sous la forme d'une onde sinusoïdale ou d'un motif sous la forme d'une ondulation, **caractérisé en ce que** lesdits un ou plusieurs câblés de renforcement sont réalisés à partir de nylon ou d'un mélange de nylon et d'aramide.

2. Bandage pneumatique selon la revendication 1, dans lequel le motif sous la forme d'une onde sinusoïdale ou le motif sous la forme d'une ondulation s'étend dans la direction circonférentielle du bandage pneumatique (10).

3. Bandage pneumatique selon la revendication 1 ou 2, dans lequel, une période du motif sous la forme d'une onde sinusoïdale ou du motif sous la forme d'une ondulation se situe dans une plage allant de 75 mm à 100 mm.

4. Bandage pneumatique selon au moins une des revendications précédentes, dans lequel l'amplitude du motif sous la forme d'une onde sinusoïdale ou du motif sous la forme d'une ondulation se situe dans une plage allant de 1 à 5 mm, de préférence de 2 mm à 3,5 mm ou de 2,5 mm à 3 mm.

5. Bandage pneumatique selon au moins une des revendications précédentes, dans lequel un rayon de courbure du motif sous la forme d'une onde sinusoïdale ou du motif sous la forme d'une ondulation est inférieur à 100 mm, dans lequel le rayon de courbure est défini comme étant le rayon du cercle qui passe par trois points sur l'onde sinusoïdale.

6. Bandage pneumatique selon au moins une des revendications précédentes, dans lequel la bande constituée par des câblés de renforcement possède une largeur qui se situe dans la plage allant de 5 mm à 51 mm, de préférence dans la plage allant de 6,35 mm à 12,7 mm.

7. Bandage pneumatique selon au moins une des revendications précédentes, dans lequel lesdits un ou plusieurs câblés de renforcement sont réalisés à partir de nylon 6/6.

8. Bandage pneumatique selon au moins une des revendications précédentes, dans lequel lesdits un ou plusieurs câblés de renforcement sont des câblés de type 3000/1/3 dtex, de préférence avec 6 torsions par 2,54 cm.

9. Bandage pneumatique selon au moins une des revendications précédentes, dans lequel lesdits un ou plusieurs câblés de renforcement de la bande sont réalisés à partir d'un premier câble de renforcement et d'un deuxième câble renforcement qui sont torsadés l'un avec l'autre pour aboutir à un câblé obtenu par fusion, dans lequel le premier câblé de renforcement et le deuxième câblé de renforcement sont réalisés à partir de matériaux différents.

10. Bandage pneumatique selon au moins une des revendications précédentes, dans lequel lesdits un ou plusieurs câblés de renforcement de la bande sont réalisés à partir d'un câble de renforcement à base de nylon et d'un deuxième câble de renforcement base d'aramide qui sont torsadés l'un avec l'autre pour aboutir à un câblé obtenu par fusion.

11. Bandage pneumatique selon au moins une des revendications précédentes, dans lequel lesdits un ou plusieurs câblés de renforcement sont réalisés à partir d'un mélange de nylon et d'aramide.

12. Bandage pneumatique selon au moins une des revendications précédentes, dans lequel le bandage pneumatique (10) possède en outre un paquet de ceintures (40) qui sont disposées entre une carcasse (31) du bandage pneumatique et une portion (36) du bandage pneumatique faisant office de bande de roulement et vers l'intérieur, dans la direction radiale, par rapport à la ceinture de protection sans soudure (100).

13. Bandage pneumatique selon la revendication 12, dans lequel le paquet de ceintures (40) englobe une plusieurs structures de ceintures en zigzag (62, 64, 66) et une ou plusieurs ceintures (50, 52, 54) formant un angle relativement petit.

14. Bandage pneumatique selon au moins une des revendications précédentes, dans lequel la ceinture de protection (100) s'étend à partir d'un premier épaulement du bandage pneumatique jusqu'à un deuxième épaulement du bandage pneumatique et/ou se termine de chaque côté de la ceinture de protection (100) dans une plage allant 38,1 mm à 50,8 mm vers l'intérieur par rapport à la largeur de la ceinture la plus large du bandage pneumatique (10).
